# FASCICULE DE BREVET EUROPEEN

(11) **EP 1 710 106 B1**
(45) Date de publication et mention de la délivrance du brevet: **25.01.2012**
(21) Numéro de dépôt: 06112118.2
(22) Date de dépôt: 31.03.2006
(51) Int. Cl.: B60J 1/20, B60J 7/00, B60R 5/04

(54) **Dispositif d'occultation pour véhicule automobile, et véhicule automobile correspondant**
Abschirmeinrichtung für Motorfahrzeug, und korrespondierendes Motorfahrzeug
Shading device for motor vehicle, and corresponding motor vehicle

(30) Priorité: 07.04.2005 FR 0503496
(43) Date de publication de la demande: 11.10.2006
(73) Titulaire: Advanced Comfort Systems France SAS - ACS France, 79300 Bressuire (FR)
(72) Inventeur: Fourel, Pascal, 35400 Saint-Malo (FR)
(74) Mandataire: Bioret, Ludovic

(56) Documents cités:
- FR-A- 2 749 878
- FR-A- 2 786 809
- FR-A- 2 873 339
- GB-A- 2 334 933
- JP-A- 59 190 040
- US-A- 5 595 229

## Description

Le domaine de l'invention est celui des véhicules automobiles. Plus précisément, l'invention concerne la mise en oeuvre de stores d'occultation dans les véhicules automobiles.

Des dispositifs d'occultation (ou stores) sont fréquemment mis en oeuvre dans les véhicules automobiles, par exemple pour l'occultation de surfaces vitrées telles que les vitres latérales, les vitres de custode, la vitre arrière ou le hayon du véhicule ou encore un pavillon ou un toit ouvrant. Ils peuvent également être utilisés pour l'occultation d'un espace arrière destiné à recevoir des bagages et avoir ainsi la fonction de cache-bagages.

De tels dispositifs d'occultation comprennent classiquement un rideau (ou toile) d'occultation monté sur un enrouleur et portant, au niveau de son extrémité libre, une barre de tirage. Lorsque l'utilisateur ne souhaite pas utiliser le dispositif, le rideau d'occultation est replié autour du tube d'enroulement.

Cependant, le montage du dispositif dans le véhicule, par le constructeur par exemple, peut ne pas être aisé. En effet, les extrémités du dispositif sont généralement conçues de façon à être montées au niveau de moyens de fixations sur une structure fixe du véhicule, et le jeu prévu pour le montage est en général assez réduit, de façon notamment à assurer un bon maintien du dispositif une fois monté. Le montage du dispositif dans le véhicule peut ainsi être difficile, qu'il s'agisse d'un dispositif d'occultation pour une surface vitrée ou pour l'espace destiné à recevoir les bagages.

Un premier objectif de l'invention est de palier cet inconvénient de l'art antérieur et de proposer une technique permettant une mise en place aisée sur un véhicule lors du montage, avec des tolérances supérieures à celles des techniques connues.

Par ailleurs, dans le cas où le dispositif forme un cache-bagages, celui-ci est généralement monté au niveau de la baquette arrière du véhicule, de façon que le rideau se déploie vers le hayon du véhicule.

Lorsque l'utilisateur souhaite d'optimiser l'utilisation de l'espace utile du coffre (délimité par le dossier de la banquette arrière, les parois latérales du véhicule et le hayon en position fermée) lors du chargement d'objets dans le véhicule, la présence du store replié au niveau du dossier de la banquette arrière s'avère gênante.

Ainsi, un autre objectif de l'invention, au moins pour certains modes de réalisation, est de fournir un dispositif cache-bagages à rideau d'occultation mobile pour véhicule qui ne limite pas l'espace utile du coffre tel que défini précédemment.

Un autre inconvénient est que lorsque l'utilisateur du véhicule souhaite augmenter l'espace utile pour charger des objets encombrants en rabattant la banquette arrière, le dispositif (ou store) cache-bagages fixé au dossier forme une saillie sur la surface de chargement.

La présence de celui-ci est alors gênante, non seulement pour utiliser l'espace, mais également pour charger un objet lourd par exemple qui, posé sur le dispositif, pourrait l'endommager.

Ainsi, un autre objectif de l'invention est de proposer une technique selon laquelle le cache-bagages ne limite pas l'espace de chargement et qui ne risque pas d'être endommagé par le chargement.

Les techniques de l'art antérieur ont également envisagé la possibilité de monter le dispositif d'occultation de manière amovible, de sorte qu'il puisse être enlevé par l'utilisateur lorsqu'il ne souhaite pas l'utiliser. Le dispositif peut être destiné à l'occultation d'une vitre ou encore de l'espace destiné à recevoir les bagages.

Cependant, il peut ne pas être aisé d'enlever ou de remonter le dispositif manuellement. En effet, comme indiqué précédemment, la distance entre les moyens de fixation de chacune des extrémités du dispositif est telle qu'elle soit adaptée au maintien du dispositif lorsque celui-ci est en place. Il n'y a donc généralement pas beaucoup de jeu permettant le passage du dispositif lors de son montage ou de son démontage dans le véhicule, qu'il s'agisse d'un dispositif d'occultation pour une surface vitrée ou pour occulter l'espace-bagages.

Par ailleurs, une fois enlevé, il peut ne pas être aisé de manipuler ou de stocker le dispositif en raison des dimensions de celui-ci. En effet, sa longueur peut être relativement importante, par exemple dans le cas d'un dispositif d'occultation d'un pavillon ou de l'espace destiné au bagages, la longueur du dispositif correspondant alors sensiblement à la largeur du véhicule.

Un autre objectif de l'invention, au moins pour certains modes de réalisation, est de faciliter le démontage et le remontage du dispositif, ainsi que son stockage.

Encore un autre inconvénient des techniques de l'art antérieur est qu'elles ne permettent pas de choisir d'occulter une zone particulière de l'espace arrière du véhicule. En effet, le rideau est limité aux positions dans lesquelles il est replié, déployé, ou partiellement déployé.

Ainsi, encore autre objectif de l'invention est de fournir une technique qui permette une occultation modulable d'une surface vitre ou de l'espace destiné aux bagages.

L'invention a encore pour objectif de fournir une telle technique, présentant une bonne fiabilité dans le temps.

Ces objectifs, ainsi que d'autres qui apparaîtront plus clairement par la suite, sont atteints selon l'invention à l'aide d'un dispositif d'occultation pour véhicule automobile selon la revendication 1.

JP 59/90040 divulgue le préambule de la revendication 1.

Ainsi, les boîtiers à l'intérieur desquels sont logés les tubes d'enroulement sont articulés l'un par rapport à l'autre, de façon qu'ils puissent être repliés l'un contre l'autre (l'un des boîtiers bascule alors d'un angle de 180° autour de l'articulation située entre les deux boîtiers). Cela permet de faciliter le stockage du dispositif lorsque la longueur de celui dans l'état de travail est trop importante.

En outre, la présence des deux rideaux d'occultation permet de moduler l'occultation de la surface vitrée ou de l'espace destiné aux bagages par exemple dans l'état de travail. Les deux tubes d'enroulement logés à l'intérieur des boîtiers sont alors alignés et chacun des rideaux peut être déployé ou replié autour d'un des tubes d'enroulement indépendamment de la position de l'autre rideau, de façon que, lorsque les deux rideaux sont déployés, la totalité de l'espace-bagages ou de la surface vitrée soit occultée.

L'utilisateur dispose ainsi d'une modularité d'occultation plus importante qu'avec les cache-bagages classiques connus dans l'art antérieur, l'un des rideaux d'occultation pouvant par exemple être déployé ou partiellement déployé tandis que l'autre est replié.

Avantageusement, les dimensions des boîtiers et des tubes d'enroulement logés à l'intérieur sont identiques et leur longueur respective est sensiblement égale à la moitié de la largeur de la surface vitrée ou de l'espace bagages à occulter.

De façon préférée, le dispositif peut également prendre au moins un état de repliement intermédiaire dans lequel les axes longitudinaux des boîtiers ne sont pas alignés.

De façon avantageuse, la seconde extrémité d'au moins un desdits boîtiers comprend des moyens de montage/démontage dans un logement au niveau d'une structure fixe dudit véhicule.

Le dispositif d'occultation étant pliable au niveau de la jonction entre les deux boîtiers, le montage de celui-ci est alors plus aisé au niveau des logements des structures fixes du véhicule. En effet, l'espacement entre ceux-ci, disposés de part et d'autre du dispositif, est généralement conçu avec peu de jeu, de façon que le dispositif soit correctement maintenu.

Le fait de pouvoir plier le dispositif dans un état intermédiaire entre l'état de travail dans lequel il est rectiligne et l'état replié dans lequel les boîtiers sont ramenés l'un contre l'autre, permet de diminuer la longueur globale du dispositif. Il peut alors être plus aisément inséré à l'intérieur du véhicule et entre les logements des structures fixes destinés à recevoir chacune des secondes extrémités des boîtiers. Une fois disposé correctement, le dispositif pourra alors être déplié de façon à pouvoir prendre l'état de travail dans lequel il est rectiligne et de façon que les secondes extrémités s'enclenchent et soient maintenues au niveau des logements des structures fixes.

En outre, cela facilite également la conception des logements et la fabrication des structures fixes présentant les logements destinés à recevoir les extrémités du dispositif puisque qu'il n'est plus nécessaire que l'écartement entre celles-ci soit aussi ajusté, le montage du dispositif selon l'invention permettant une plus grande tolérance.

Par ailleurs, les moyens de montage au niveau des logements des structures fixes permettant également le démontage du dispositif, celui-ci pourra alors aisément être enlevé par l'utilisateur lorsqu'il ne souhaite pas s'en servir et que sa présence, même lorsque les rideaux sont repliés, est gênante.

Le démontage et le remontage par l'utilisateur dans le véhicule sont alors plus aisés que pour les dispositifs de l'art antérieur, dans la mesure où le dispositif peut être légèrement plié de façon à disposer d'un jeu supplémentaire.

De plus, une fois démonté, l'utilisateur pourra replier totalement le dispositif de sorte que les deux boîtiers soient accolés, ce qui permet de faciliter à la fois la manipulation du dispositif et son stockage.

De façon préférée lesdites premières extrémités desdits boîtiers portent des moyens de solidarisation l'une à l'autre dans ledit état de travail.

Ainsi, outre l'articulation solidarisant entre elles un des bords de chacune des premières extrémités des boîtiers, celles-ci pourront également présenter des moyens de solidarisation permettant de les solidariser lorsque les boîtiers sont alignés et que les deux premières extrémités sont accolées l'une en face de l'autre. Les moyens de solidarisation pourront être centrés par rapport aux extrémités ou encore situés au voisinage du bord opposé à celui au niveau duquel est montées l'articulation entre les boîtiers.

Avantageusement, un des boîtiers porte des moyens de déverrouillage desdits moyens de solidarisation. Le dispositif d'occultation, pourra ainsi être verrouillé dans la position de travail une fois monté pour être utilisé. Les moyens de verrouillage pourront être raccordés à un interrupteur situé au niveau de la partie supérieure d'un des boîtiers.

Ainsi, lorsque l'utilisateur souhaite démonter le dispositif, il lui suffira d'appuyer sur l'interrupteur pour enclencher le déverrouillage et de le soulever (par exemple, en fonction de la forme des structures fixes au niveau desquelles il est monté) en le pliant pour l'ôter.

L'extrémité libre desdits deux rideaux sont équipés respectivement d'une première et d'une seconde barres de tirage solidarisées ou solidarisables.

Lorsque les barres de tirage sont solidarisées, le déploiement de l'ensemble des rideaux d'occultation sera facilité pour l'utilisateur lorsque celui-ci souhaite occulter totalement l'espace destiné aux bagages ou la surface vitrée. Les moyens de solidarisation des barres de tirage pourront être conçus de façon à autoriser que celles-ci soient désolidarisées lorsque l'utilisateur le souhaite pour pouvoir moduler l'occultation.

Dans le cas où les barres de tirage sont solidaires l'une de l'autre, elles pourront alors avantageusement être articulées l'une par rapport à l'autre.

Ainsi lorsque le dispositif sera plié, les barres de tirage seront également mobiles autour de l'articulation les reliant.

De façon avantageuse, l'articulation desdites barres est déportée de façon à être sensiblement coaxiale avec l'articulation desdits boîtiers.

En effet, il convient alors que l'articulation entre les boîtiers et l'articulation entre les barres de tirage soient coaxiales. En particulier, lorsque les barres de tirage ne sont pas au même niveau que l'articulation entre les boîtiers, l'articulation entre les barres de tirage sera alors déportée de façon qu'elle soit alignée avec l'autre articulation.

Avantageusement, au moins une desdites barre de tirage est formée d'un cadre à l'intérieur duquel une toile est tendue.

L'axe de l'articulation entre lesdits boîtiers s'étend sensiblement horizontalement dans ladite position de travail.

Ainsi, dans le cas où le dispositif forme un cache-bagages (par exemple) dont les rideaux d'occultation se déploient sensiblement horizontalement, lorsque l'articulation s'étend selon une direction horizontale, lors du passage du dispositif dans l'état repliée à partir de l'état de travail, les boîtiers seront déplacés de façon qu'ils restent dans un même plan sensiblement vertical. Ainsi, le mouvement de montage du dispositif ou de démontage de celui-ci dans les logements des structures fixes du véhicule au voisinage de l'état de travail sera compris dans un plan essentiellement vertical.

Un tel dispositif selon l'invention peut être mis en oeuvre notamment pour l'occultation d'au moins un des éléments appartenant au groupe comprenant :
- les espaces destinés à recevoir les bagages ;
- les pavillons ;
- les toits ouvrants ;
- les vitres arrière :

- les vitres latérales ;
- les vitres de custodes.

Dans le cas d'un toit ouvrant, la surface vitrée correspond à une ouverture dans la carrosserie du véhicule.

L'invention concerne également les véhicules automobiles comprenant au moins un dispositif d'occultation tel que décrit ci-dessus, ainsi que les véhicules comprenant des logements de montage prévu pour recevoir la seconde extrémité d'au moins un desdits boîtiers.

D'autres caractéristiques et avantages de l'invention apparaîtront plus clairement à la lecture de la description suivante d'un mode de réalisation préférentiel de l'invention, donnée à titre de simple exemple illustratif et non limitatif, et des dessins annexés parmi lesquels :
- la figure 1 illustre de façon schématique un dispositif d'occultation selon l'invention dans un état de repliement intermédiaire, lors du montage dans le véhicule;
- la figure 2 présente le dispositif selon la figure 1 dans l'état de travail, les rideaux d'occultation étant déployés ;
- la figure 3 illustre un dispositif d'occultation selon l'invention dans l'état de travail, dont les barres de tirages sont solidaires l'une de l'autre;
- la figure 4 présente le dispositif selon la figure 3 dans un état de repliement intermédiaire.

Le principe général de l'invention repose sur un dispositif d'occultation comprenant deux rideaux d'occultation montés sur des tubes d'enroulement logés chacun dans un boîtier, les deux boîtiers étant articulés l'un par rapport à l'autre de façon que le dispositif puisse prendre un état de travail dans lequel il est rectiligne, et un état replié dans lequel les boîtiers sont ramenés sensiblement l'un contre l'autre.

Avantageusement, le dispositif peut également prendre des états intermédiaires dans lesquels les axes longitudinaux des boîtiers ne sont pas alignés.

Le dispositif permet ainsi de faciliter son montage dans le véhicule et éventuellement son démontage par rapport aux dispositif connus de l'art antérieur, et permet en outre un stockage plus aisé lorsqu'il n'est pas monté dans le véhicule.

De plus, la présence des deux rideaux d'occultation offre plus de modularité d'occultation que les dispositifs classiques comprenant un seul rideau d'occultation.

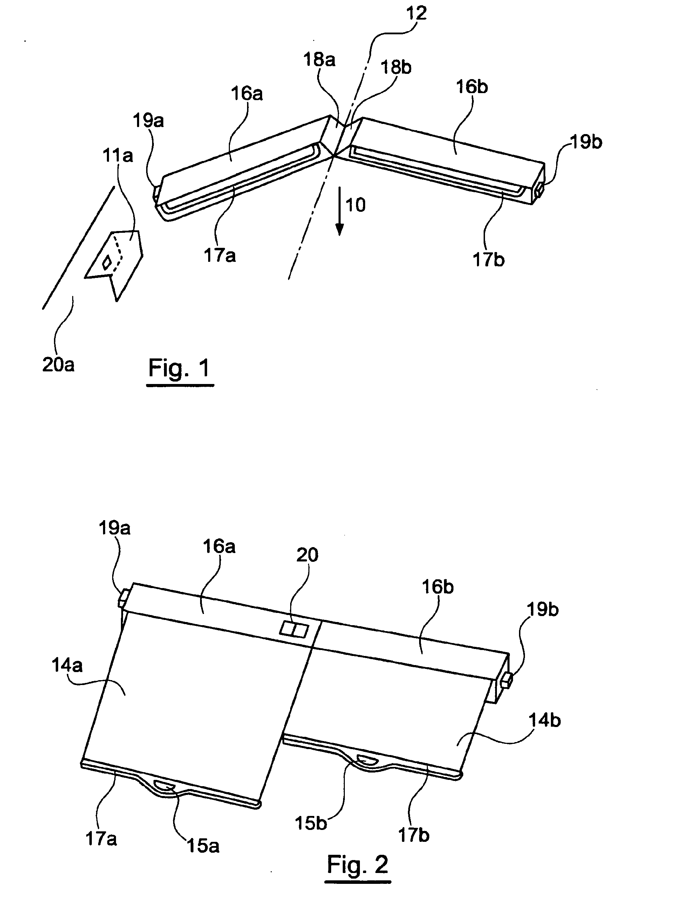

On présente en relation avec la figure 1, un dispositif d'occultation selon l'invention dans un état de repliement intermédiaire lors du montage dans un véhicule automobile.

Le dispositif comprend deux boîtiers 16a, 16b articulés l'un par rapport à l'autre par une première de leurs extrémités, 18a, 18b. Les axes longitudinaux des boîtiers 16a, 16b ne sont pas alignés et l'ensemble du dispositif est placé au voisinage de la position qu'il doit occuper lors du montage dans le véhicule.

Les rideaux d'occultation sont repliés autour des tubes d'enroulement logés à l'intérieur des boîtiers 16a, 16b, et seules les barres de tirage 17a, 17b équipant les deux rideaux d'occultations sont visibles.

L'axe 12 de l'articulation entre les boîtiers 16a, 16b est sensiblement horizontal et le mouvement des boîtiers 16a, 16b est donc compris dans un plan vertical.

Chacune des secondes extrémités 19a, 19b des boîtiers 16a, 16b est destinée à coopérer avec un logement 11a, ménagé à l'intérieur d'une structure fixe 20a pouvant être une paroi latérale par exemple. Un logement similaire est prévu de l'autre côté du dispositif, mais n'est pas représenté.

Le montage du dispositif se fait alors encliquetant les extrémités 19a, 19b dans les logements 11a correspondants et en abaissant la partie centrale du dispositif selon la direction indiquée par la flèche 10 pour que celui-ci prenne l'état de travail.

Lorsque les moyens de fixations de celui-ci au niveau des logements des structures fixes du véhicule le permettent, le désengagement du dispositif pourra ensuite se faire en soulevant la partie centrale du dispositif selon une direction verticale.

Tels que représentés, les boîtiers 16a et 16b sont de mêmes dimensions, la somme des longueurs de ceux-ci correspondant sensiblement égale à la dimension de l'espace-bagages à occulter ou de la surface vitrée.

La figure 2 illustre le dispositif d'occultation selon la figure 1 dans l'état de travail, les boîtiers 16a, 16b étant alignés. Des références numériques identiques désignent des éléments identiques sur les figures 1, 2, 3, et 4.

Le premier rideau d'occultation 14a est totalement déployé et le second rideau 14b est partiellement déployé, les deux rideaux d'occultation 14a, 14b s'étendant sensiblement dans un même plan. Les extrémités libres des rideaux 14a, 14b sont équipées respectivement d'une barre de tirage 17a, 17b pouvant présenter une poignée traversante 15a, 15b.

Les deux rideaux d'occultation 14a, 14b permettent ainsi à l'utilisateur de moduler l'occultation comme il le souhaite.

Des moyens de solidarisation pourront solidariser les extrémités 18a, 18b des boîtiers 16a, 16b dans l'état de travail, et des moyens de verrouillage de ces moyens de solidarisation, contrôlables par l'utilisateur grâce à un interrupteur 20 situé sur l'un des boîtiers, pourront être prévus.

Selon le mode de réalisation représenté en figure 2, chacun des rideaux peut être déployé ou replié indépendamment l'un de l'autre. Il sera cependant possible de prévoir des moyens de solidarisation de leur déploiement et de leur repliement en solidarisant les barres de tirage 17a, 17b.

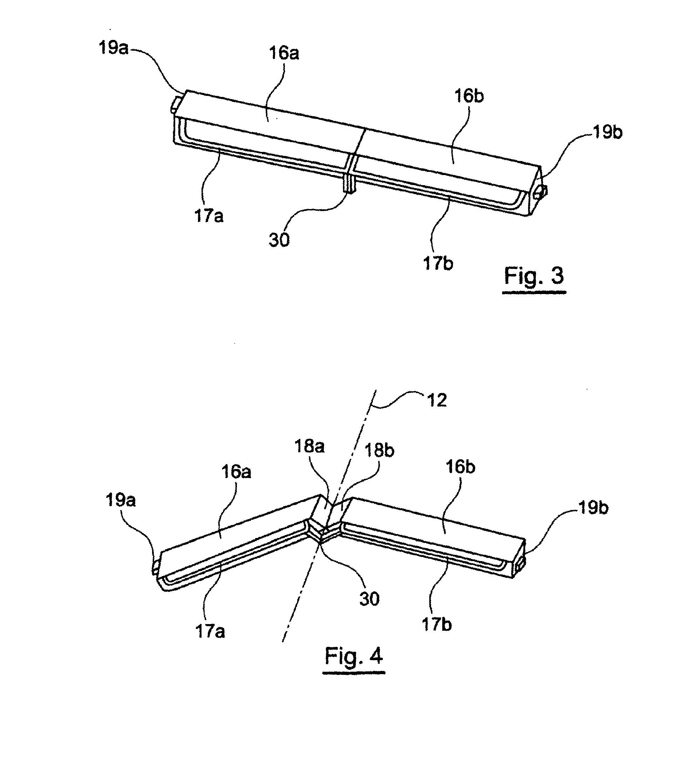

La figure 3 illustre un dispositif d'occultation dans l'état de travail dont les barres de tirage sont solidarisées par des moyens de solidarisation 30. Les rideaux d'occultation 14a, 14b sont totalement repliés autour des tubes d'enroulement logés dans les boîtiers 16a, 16b.

La figure 4 présente le dispositif selon la figure 3 dans un état de repliement intermédiaire, les boîtiers 16a, 16b n'étant plus alignés, mais ayant basculés autour de l'axe 12 comprenant l'articulation reliant leurs extrémités 18a, 18b.

Les moyens de solidarisation 30 des barres de tirages 17a, 17b comprennent également une articulation permettant leur basculement simultanément aux boîtiers.

Les barres de tirage 17a, 17b n'étant généralement pas situées directement au niveau de l'articulation entre les boîtiers, les moyens de solidarisation 30 les solidarisant sont conçus de façon que l'articulation des barres de tirage 17a, 17b soit déportée dans l'alignement de l'articulation entre les boîtiers 16a, 16b, c'est-à-dire au niveau de l'axe de basculement 12.

## Revendications

1. Dispositif d'occultation pour véhicule automobile, comprenant un premier et un second rideaux d'occultation (14a. 14b) montés respectivement sur un premier et un second tubes d'enroulement logés dans un premier et un second boîtiers (16a, 16b),
ledit dispositif pouvant prendre au moins deux états :
- un état de travail, dans lequel lesdits boîtiers (16a, 16b) sont alignés de façon que lesdits deux rideaux (14a, 14b) puissent être déployés dans un même plan : et
- un état replié dans lequel lesdits deux boîtiers (16a, 16b) sont ramenés sensiblement l'un contre l'autre,
**caractérisé en ce que** lesdits boîtiers (16a, 16b) sont articulés l'un par rapport à l'autre par une première de leurs extrémités (18a, 18b) selon un axe d'articulation (12) entre lesdits boîtiers (16a, 16b) s'étendant sensiblement horizontalement dans ladite position de travail, lesdits rideaux d'occultation se déployant sensiblement horizontalement,
et **en ce que** les extrémités libres desdits deux rideau (14a, 14b) sont équipées respectivement d'une première et d'une seconde barres de tirage (17a, 17b) solidarisées ou solidarisables, de façon à faciliter le déploiement de l'ensemble des rideaux d'occultation.

2. Dispositif d'occultation selon la revendication 1, **caractérisé en ce que** la seconde extrémité (19a, 19b) d'au moins un desdits boîtiers (16a, 16b) comprend des moyens de montage/démontage dans un logement (11a) au niveau d'une structure fixe (20a) dudit véhicule.

3. Dispositif d'occultation selon l'une quelconque des revendications 1 et 2, **caractérisé en ce que** lesdites premières extrémités (18a, 18b) desdits boîtiers (16a. 16b) portent des moyens de solidarisation l'une à l'autre dans ledit état de travail.

4. Dispositif d'occultation selon l'une quelconque des revendications 1 à 3, **caractérisé en ce qu'**un desdits boîtiers (16a, 16b) porte des moyens de déverrouillage desdits moyens de solidarisation.

5. Dispositif d'occultation selon l'une quelconque des revendications 1 à 4, **caractérisé en ce que** lesdites barres de tirage (17a, 17b) sont articulées l'une par rapport à l'autre.

6. Dispositif d'occultation selon la revendication 5, **caractérisé en ce que** l'articulation desdites barres (17a, 17b) est déportée de façon à être sensiblement coaxiale avec l'articulation desdits boîtiers (16a, 16b).

7. Dispositif d'occultation selon l'une quelconque des revendications 5 et 6, **caractérisé en ce qu'**au moins une desdites barre de tirage (17a, 17b) est formée d'un cadre à l'intérieur duquel une toile est tendue.

8. Dispositif d'occultation selon l'une quelconque des revendications 1 à 7, **caractérisé en ce qu'**il est destiné à l'occultation d'au moins un élément appartenant au groupe comprenant :
- les espaces destinés à recevoir les bagages ;
- les pavillons ;
- les toits ouvrants :
- les vitres arrière :
- les vitres latérales ;
- les vitres de custodes.

9. Véhicule automobile **caractérisé en ce qu'**il comprend au moins un dispositif d'occultation selon l'une quelconque des revendications 1 à 8.

10. Véhicule automobile selon la revendication 9, **caractérisé en ce qu'**il comprend des logements de montage (11a) prévu pour recevoir Ja seconde extrémité (19a, 19b) d'au moins un desdits boîtiers (16a, 16b).

## Claims

1. Occultation device for a motor vehicle, comprising a first and a second occultation curtain (14a, 14b) mounted on a first and a second winding tube, respectively, which are accommodated in a first and a second casing (16a, 16b),
the device being able to assume at least two states:
- an operating state in which the casings (16a, 16b) are aligned so that the two curtains (14a, 14b) can be extended in the same plane; and
- a folded state in which the two casings (16a, 16b) are moved substantially one against the other,
**characterised in that** the casings (16a, 16b) are articulated relative to each other via a first of their ends (18a, 18b) along an articulation axis (12) between the casings (16a, 16b) which extend substantially horizontally in the operating position, the occultation curtains extending substantially horizontally,
and **in that** the free ends of the two curtains (14a, 14b) are provided with a first and a second pulling bar (17a, 17b), respectively, which are fixedly-joined or are able to be fixedly joined in order to facilitate the extension of the assembly of the occultation curtains.

2. Occultation device according to claim 1, **characterised in that** the second end (19a, 19b) of at least one of the casings (16a, 16b) comprises assembly/disassembly means in a housing (11a) in the region of a fixed structure (20a) of the vehicle.

3. Occultation device according to either claim 1 or claim 2, **characterised in that** the first ends (18a, 18b) of the casings (16a, 16b) carry means for fixing one to the other in the operating state.

4. Occultation device according to any one of claims 1 to 3, **characterised in that** one of the casings (16a, 16b) carries means for unlocking the fixing means.

5. Occultation device according to any one of claims 1 to 4, **characterised in that** the pulling bars (17a, 17b) are articulated relative to each other.

6. Occultation device according to claim 5, **characterised in that** the articulation of the bars (17a, 17b) is offset so as to be substantially coaxial with respect to the articulation of the casings (16a, 16b).

7. Occultation device according to any one of claims 5 to 6, **characterised in that** at least one of the pulling bars (17a, 17b) is formed by a frame inside which a web is tensioned.

8. Occultation device according to any one of claims 1 to 7, **characterised in that** it is intended to occult at least one element belonging to the group comprising:
- spaces which are intended to receive luggage;
- roofs;
- sunroofs;
- rear windows;
- side windows;
- rear quarter panel windows.

9. Motor vehicle, **characterised in that** it comprises at least one occultation device according to any one of claims 1 to 8.

10. Motor vehicle according to claim 9, **characterised in that** it comprises assembly housings (11a) which are provided in order to receive the second end (19a, 19b) of at least one of the casings (16a, 16b).

## Patentansprüche

1. Abdeckungsvorrichtung für ein Kraftfahrzeug, das einen ersten und einen zweiten Abdeckvorhang (14a, 14b) aufweist, die jeweils auf einer ersten und einer zweiten Aufwickelwelle angebracht sind, welche in einem ersten und in einem zweiten Gehäuse (16a, 16b) untergebracht sind, wobei die Vorrichtung zwei Zustände einnehmen kann :
• einen Arbeitszustand, in dem die Gehäuse (16a, 16b) so angeordnet sind, daß die beiden Abdeckvorhänge (14a, 14b) in einer gleichen Ebene geöffnet werden können ; und
• einen zusammengelegten Zustand, in dem die beiden Gehäuse (16a, 16b) im Wesentlichen in Anlage zueianander gebracht sind ;
**dadurch gekennzeichnet, dass** die Gehäuse (16a, 16b) mit einem ihrer Enden (18a, 18b) in einer Schwenkachse (12), die zwischen den beiden Gehäusen (16a, 16b) im Wesentlichen horizontal in der Arbeitsposition verläuft, relativ zueinander verschwenkt werden können, wobei die Abdeckvorhänge sich im Wesentlichen horizontal öffnen, und dass die freien Enden der Abdeckvorhänge (14a, 14b) jeweils mit einer ersten und einer zweiten Zugstange (17a, 17b) versehen sind, die mit ihnen verbunden oder verbindbar ist, um das Öffnen der Abdeckvorhangseinheit zu erleichtern.

2. Abdeckungsvorrichtung gemäß Anspruch 1, **dadurch gekennzeichnet, dass** das zweite Ende (19a, 19b) mindestens eines der Gehäuse (16a, 16b) in einer Aufnahme (11a) auf Höhe einer festen Struktur (20a) des Fahrzeuges Montage-/Demontagemittel aufweist.

3. Abdeckungsvorrichtung gemäß einem der Ansprüche 1 bis 2, **dadurch gekennzeichnet, dass** die ersten Enden (18a, 18b) der Gehäuse (16a, 16b) Verbindungsmittel zum Verbinden der beiden Gehäuse im Arbeitszustand aufweisen.

4. Abdeckungsvorrichtung gemäß einem der Ansprüche 1 bis 3, **dadurch gekennzeichnet, dass** eines der Gehäuse (16a, 16b) Mittel zum Lösen der Verbindung zwischen den Verbindungsmittel aufweist.

5. Abdeckungsvorrichtung gemäß einem der Ansprüche 1 bis 4, **dadurch gekennzeichnet, dass** die Zugstangen (17a, 17b) jeweils relativ zueinander schwenkbar sind.

6. Abdeckungsvorrichtung gemäß Anspruch 5, **dadurch gekennzeichnet, dass** die Schwenkachse der Zugstangen (17a, 17b) so verlagert ist, so dass sie im Wesentlichen koaxial zu der Schwenkachse der Gehäuse (16a, 16b) ist.

7. Abdeckungsvorrichtung gemäß einem der Ansprüche 5 bis 6, **dadurch gekennzeichnet, dass** mindestens eine der Zugstangen (17a, 17b) aus einem Rahmen gebildet ist, in dessen Inneren ein Tuch gespannt ist.

8. Abdeckungsvorrichtung gemäß einem der Ansprüche 1 bis 7, **dadurch gekennzeichnet, dass** sie zur Abdeckung mindestens eines Elementes der Gruppe umfassend
• die Gepäckräume ;
• die Glasdächer ;
• die Schiebedächer ;
• die Rückscheibe ;
• die Seitenscheiben ;
• die Windschutzscheiben
bestimmt ist.

9. Kraftfahrzeug, **dadurch gekennzeichnet, dass** es mindestens eine Abdeckungsvorrichtung gemäß einem der Ansprüche 1 bis 8 aufweist.

10. Kraftfahrzeug gemäß Anspruch 9, **dadurch gekennzeichnet, daß** es Montageaufnahmen (11a) zur Aufnahme des zweiten Endes (19a, 19b) mindestens eines der Gehäuse (16a, 16b) aufweist.
